# EUROPEAN PATENT SPECIFICATION

(11) **EP 4 279 813 B1**
(45) Date of publication and mention of the grant of the patent: **15.01.2025**
(21) Application number: 22847398.9
(22) Date of filing: 21.11.2022
(51) Int. Cl.: F23R 3/28

(54) **DEVICE FOR RESEARCH ON AN IGNITION MECHANISM OF AN OBLIQUE SPRAYING NON-PREMIXED ANNULAR COMBUSTION CHAMBER**
FORSCHUNGSVORRICHTUNG FÜR DEN ZÜNDMECHANISMUS EINER RINGBRENNKAMMER OHNE VORMISCHUNG MIT SCHRÄGSPRÜHUNG
DISPOSITIF DE RECHERCHE DE MÉCANISME D'ALLUMAGE DE CHAMBRE DE COMBUSTION ANNULAIRE SANS MÉLANGE PRÉALABLE À PULVÉRISATION OBLIQUE

(30) Priority: 15.03.2022 CN 202210254085
(43) Date of publication of application: 22.11.2023
(73) Proprietor: Zhejiang University, Hangzhou, Zhejiang 310027 (CN)
(72) Inventor: WANG, Gaofeng, Hangzhou Zhejiang 310027 (CN); WANG, Hui, Hangzhou Zhejiang 310027 (CN); ZHONG, Liang, Hangzhou Zhejiang 310027 (CN); ZHU, Zhixin, Hangzhou Zhejiang 310027 (CN); FANG, Yuanqi, Hangzhou Zhejiang 310027 (CN)
(74) Representative: Ipside
(86) International application number: PCT/CN2022/133204
(87) International publication number: WO 2023/173792

(56) References cited:
- CN-A- 107 014 618
- CN-A- 107 327 872
- CN-A- 112 856 413
- CN-A- 114 508 769
- CN-U- 211 822 364
- GB-A- 657 938
- GB-A- 721 750
- US-A- 4 936 090
- DATABASE WPI Week 201780, Derwent World Patents Index; AN 2017-779078, XP002810825
- DATABASE WPI Week 2020092, Derwent World Patents Index; AN 2020-B0638C, XP002810826
- DATABASE WPI Week 201765, Derwent World Patents Index; AN 2017-54507H, XP002810827
- DATABASE WPI Week 200715, Derwent World Patents Index; AN 2007-140010, XP002810828

## Description

### Technical Field

The present invention relates to the research field of aero-engines and gas turbines, more specifically, relates to the research field of experiments of interaction between fuel atomization and obliquely-injected swirled air as well as ignition in a combustor, and in particular, to a device for experimental research on an ignition mechanism in an annular combustor by means of a combination of optical diagnosis and acoustic measurement.

### Background Art

During the design of an aero-engine and a gas turbine, ignition is a very critical process for a combustor, which involves a complex physical process and also has important scientific significance. How to optimize high local heat load distribution at a combustor outlet and a flame tube wall to improve engine efficiency and ensure the stable ignition of the aero-engine under complex conditions such as high altitude, plateau, and cold is the current research focus in the aero-engine industry. A modern aero-engine combustor has an advanced annular structure with a plurality of swirl burners. There are mainly two types of such annular structures: one for a straight-flow combustor, which is generally used in most turbofan engines; and the other for a counter-flow combustor, which is generally used in small and medium-sized turboshaft aero-engines with centrifugal compressors. The two combustors are both of a straight-injecting type, which has a certain requirement for the length of the combustor. Currently, a short annular combustor with a more compact layout and high temperature rise is adopted in an advanced combustor design. This challenges a conventional straight-flow or counter-flow design in which a swirl burner's central axis is parallel to the engine's central axis.

For an industrial annular combustor, the structure thereof is compact and highly integrated, it is difficult to mount a measurement window, and it is difficult to conduct in-depth research on flow field details, ignition performance, flame propagation characteristics, a thermo-acoustic coupling mechanism, etc. on an actual engine experimental platform. Therefore, research models of annular combustors on a laboratory scale are more common in related research.

For the research models of annular combustors on a laboratory scale, much research is conducted based on premixed and partially premixed models of gas fuel. An annular combustor using liquid atomizing and injecting is closer to the actual working configuration of an aero-engine. Experiments of flow field characteristics, ignition, flame propagation, thermo-acoustic coupling, etc. in an annular combustor based on this model are closer to practical aero-engine research, and an atomization ignition mechanism of an annular combustor in a non-premixed mode that has not been studied is of great significance for optimizing the design of aero-engines and gas turbines.

Patent document CN107327872A discloses an oblique-spraying circular-flow annular combustion chamber. The annular combustion chamber comprises main parts including an air distribution chamber, oblique-spraying swirling-flow nozzles, an annular combustion chamber body and the like, when the oblique-spraying circular-flow annular combustion chamber works, the air and fuel enter a plurality of (6 to 24) oblique-spraying swirling-flow nozzles which are circumferentially and symmetrically distributed from the air distribution chamber, and swirling flow is generated and enters the annular combustion chamber body in an injection manner; a certain angle is formed by axial lines of the oblique-spraying swirling-flow nozzles and a bottom plane of the annular combustion chamber body, so that air flow entering the combustion chamber body has a certain circumferential speed component, and circumferential motion is generated in the annular combustion chamber body to enhance the mixing of the circumferential air flow.

### Summary

In view of this, the present invention provides a device for research on an ignition mechanism of an oblique-injecting non-premixed annular combustor, the device comprising an annular combustor which can generate swirl flow by means of an oblique-injecting swirl nozzle to shorten a length of the annular combustor and meet a requirement for high temperature rise. At the same time, the combustor in the present invention comprises a non-premixed circumferential spraying part, which can meet requirements of related research close to an actual aero-engine in a laboratory scale, including flow field characteristics, ignition, a flame propagation process, a thermo-acoustic coupling mechanism, etc. In addition, research under different operating conditions and different conditions can be conducted by changing and adjusting structural parameters and experimental parameters.

In order to achieve the above objective, the present invention uses the following technical solution:
a device for research on an ignition mechanism of an oblique-injecting non-premixed annular combustor, the device comprising: a distribution chamber, an annular combustor, and an atomizing jet assembly, wherein the distribution chamber comprises a top flange, and the annular combustor comprises oblique-injecting swirl nozzles, an inner wall of the combustor, and an outer wall assembly of the combustor; and the inner wall of the combustor and the outer wall assembly of the combustor are mounted at a top end of the top flange; each of the oblique-injecting swirl nozzles obliquely passes through the top flange and is mounted on the top flange, and the annular combustor is in communication with the distribution chamber through the oblique-injecting swirl nozzle; the atomizing jet assembly comprises an atomizing nozzle and an atomizing nozzle fixing seat, wherein the atomizing nozzle fixing seat is provided with a fuel delivery inlet threaded hole and an atomizing nozzle connecting threaded hole, the atomizing nozzle fixing seat is in a threaded connection with a side wall of an outer middle wall of the combustor, the atomizing nozzle is mounted in the atomizing nozzle connecting threaded hole, and the fuel delivery inlet threaded hole is connected to a fuel delivery pipeline; and a side wall of the outer wall assembly of the combustor is provided with an ignition pin hole.

Further, the angle of the fuel delivery inlet threaded hole and the atomizing nozzle connecting the threaded hole is adjustable, so as to conduct experimental research at different included angles formed between an atomized jet and an obliquely-injected air jet.

The oblique-injecting swirl nozzle is provided with a first swirl channel, a second swirl channel, and a main flow channel.

Further, the distribution chamber further comprises a middle flange, a bottom flange, and a middle support column, wherein the middle flange is in a threaded connection with the top end of the bottom flange, the top flange is in a threaded connection with the top end of the middle flange, the middle support column is located on a central axis and is in a threaded connection between the top flange and the bottom flange, and the bottom flange is provided with air inlets.

Further, the air inlets are circumferentially symmetrically distributed in the bottom flange.

Further, the distribution chamber further comprises a honeycomb plate, the middle flange passes through the centre of the honeycomb plate, and the honeycomb plate is mounted at the bottom end of the middle flange.

Further, a side wall of the middle flange is provided with an acoustic pressure test hole.

Further, the outer wall assembly of the combustor comprises an outer lower wall of the combustor, the outer middle wall of the combustor, and an outer upper wall of the combustor, wherein the outer lower wall of the combustor is mounted at a bottom end of the outer middle wall of the combustor, the outer upper wall of the combustor is mounted at a top end of the outer middle wall of the combustor, the outer lower wall of the combustor is mounted on the top flange, the atomizing jet assembly is mounted on the outer middle wall of the combustor, and the ignition pin hole is formed in the outer lower wall of the combustor.

Further, the outer upper wall of the combustor and the outer lower wall of the combustor have adjustable heights, so as to conduct experimental research at different atomization heights from an obliquely-injected jet outlet.

The present invention has the following beneficial effects.

Atomized fuel gas sprayed by the atomizing nozzle of the present invention enters the combustor to generate swirl flow, so as to shorten the length of the annular combustor and meet the requirement for high temperature rise. The circumferentially symmetrical arrangement of air inlets enables a pressure environment in the distribution chamber to maintain a certain symmetry and uniformity, and the pressure environment causes the mixed gas to enter each oblique-injecting swirl nozzle at a relatively uniform flow rate, which facilitates the realization of similarity in flow and combustion between the nozzles. A plurality of small holes in the honeycomb plate can weaken the turbulence and vortex of airflow and improve the airflow uniformity in the distribution chamber, and the staggered arrangement of a plurality of layers of honeycomb plates can further improve this effect. The angles of the fuel delivery inlet threaded hole and the atomizing nozzle connecting the threaded hole can be adjusted, so that the angle at which the atomized fuel gas sprayed by the atomizing nozzle enters the combustor can be adjusted, so as to conduct experimental research at different included angles formed between the atomized jet and the obliquely-injected air jet. The outer upper wall of the combustor and the outer lower wall of the combustor is configured to have different heights to adjust the distance between the atomizing nozzle and a swirler outlet, so as to explore changes of flow field characteristics, ignition performance, and flame propagation process as atomized fuel is injected at different outlet positions. The acoustic pressure test hole in the side wall of the middle flange can output a pressure signal in the distribution chamber to a data acquisition system, so as to provide experimental data for research on the atomization ignition mechanism of the oblique-injecting non-premixed annular combustor.

### Brief Description of the Drawings

In order to more clearly describe the technical solution in the embodiments of the present invention or in the prior art, a brief introduction to the accompanying drawings required for the description of the embodiments or the prior art will be provided below. Obviously, the accompanying drawings in the following description are merely embodiments of the present invention.
FIG. 1 is a structural cross-sectional view of an experimental device for an ignition mechanism of oblique-injecting jet non-premixed annular combustor according to the present invention;
FIG. 2 is an axonometric view of oblique-injecting jet annular burner of the device according to the present invention;
FIG. 3 is a top view and a bottom view of oblique-injecting jet annular burner of the device according to the present invention;
FIG. 4 is a schematic structural diagram of an outer middle wall of a combustor of the device according to the present invention;
FIG. 5 is a first schematic structural diagram of an atomizing nozzle of a burner and a fixing seat therefor of the device according to the present invention;
FIG. 6 is a second schematic structural diagram of an atomizing nozzle of a burner and a fixing seat therefor of the device according to the present invention;
FIG. 7 is a cross-sectional view of an oblique-injecting swirl nozzle and a schematic view of a swirling channel of the device according to the present invention;
FIG. 8 is a cross-sectional view taken along A-A in FIG. 7;
FIG. 9 is a cross-sectional view taken along B-B in FIG. 7; and
FIG. 10 is a bottom view of a top flange of the device according to the present invention.

In the figures:
1 - Bottom flange, 2 - Middle flange, 3 - Top flange, 4 - Inner wall of an annular combustor, 5 - Outer lower wall of the annular combustor, 6 - Outer middle wall of the annular combustor, 7 - Outer upper wall of the annular combustor, 8 - Atomizing nozzle fixing seat, 9 - Atomizing nozzle, 10 - Oblique-injecting swirl nozzle, 11 - Middle fastening bolt, 12 - Middle support column, 13 - Honeycomb plate, 14 - Air inlet, 15 - Distribution chamber, 16 - Annular combustor, 17 - Atomizing nozzle fixing hole, 18 - Ignition pin hole, 19 - Acoustic pressure test hole, 20 - Burner bottom fixing hole, 21 - Outer edge fastening bolt hole, 22 - Sealing groove, 23 - Atomized jet outlet, 24 - Atomizing nozzle fixing seat limiting boss, 25 - Atomizing nozzle fixing seat mounting threaded hole, 26 - Quartz glass limiting boss, 27 - Fuel delivery inlet threaded hole, 28 - Atomizing nozzle connecting threaded hole, 29 - Recess of the oblique-injecting swirl nozzle, 30 - Boss of the oblique-injecting swirl nozzle, 31 - Main flow channel, 32 - First swirl channel, 33 - Second swirl channel, 34 - Oblique-injecting swirl nozzle passage hole, 35 - Oblique-injecting swirl nozzle mounting hole.

### Detailed Description of the Embodiments

The technical solutions in the embodiments of the present invention will be clearly and completely described below with reference to the accompanying drawings in the embodiments of the present invention. Obviously, the embodiments described are merely some rather than all of the embodiments of the present invention. The scope of protection of the present invention is defined by the appended claims.

### Embodiment 1

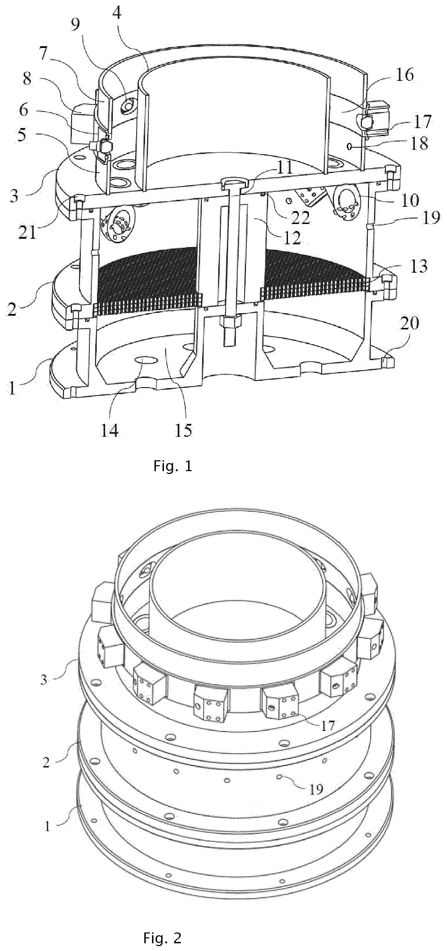

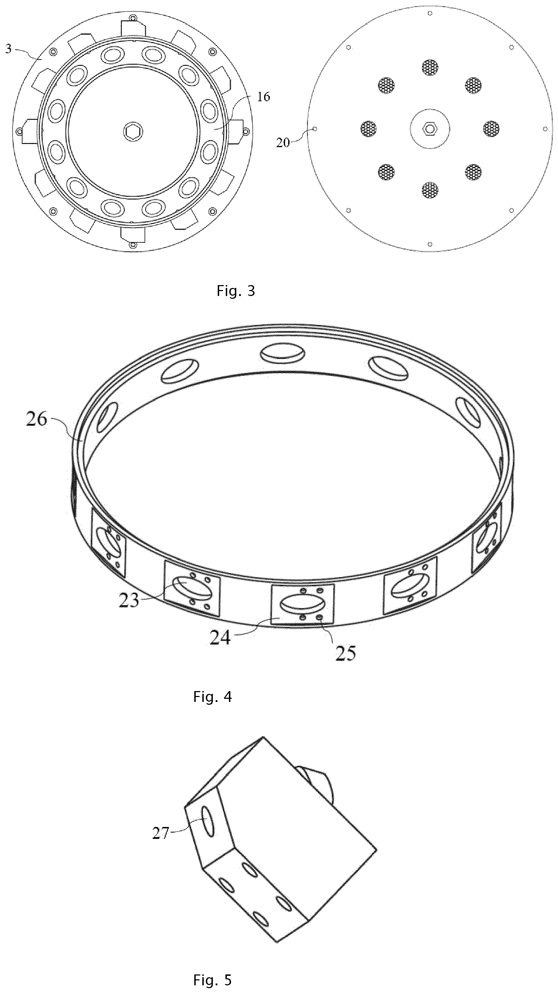

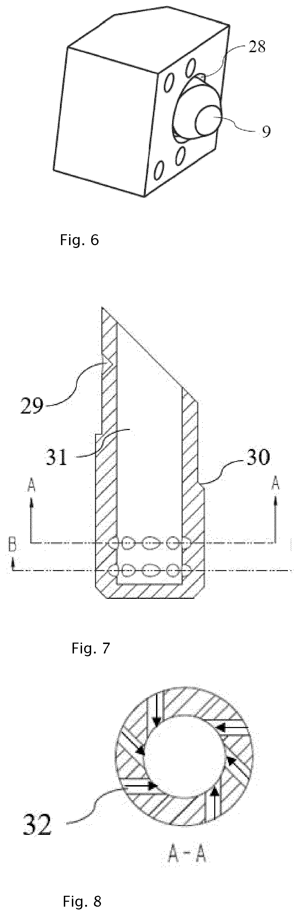

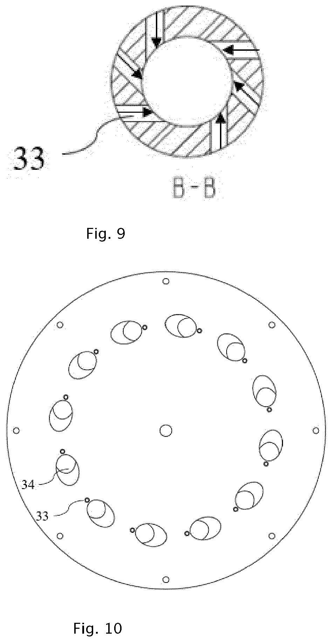

Referring to FIGS. 1 to 10, the present invention provides a device for research on an ignition mechanism of an oblique-injecting non-premixed annular combustor, the device comprising a distribution chamber 15, an annular combustor 16, and an atomizing jet assembly. The distribution chamber 15 comprises a top flange 3. The annular combustor 16 comprises oblique-injecting swirl nozzles 10, an inner wall 4 of the annular combustor, and an outer wall assembly of the annular combustor. An upper surface of the top flange 3 is provided with a sealing groove 22. The inner wall 4 of the annular combustor and the outer wall assembly of the annular combustor are mounted in a groove at the top end of the top flange 3. The inner wall 4 of the annular combustor and the outer wall assembly of the annular combustor are in a millimeter-scale clearance fit with the top flange 3. The oblique-injecting swirl nozzles 10 obliquely pass through oblique-injecting swirl nozzle passage holes 34 in the top flange 3, and are circumferentially uniformly mounted in oblique-injecting swirl nozzle mounting holes 35 in the top flange 3, and the annular combustor 16 is in communication with the distribution chamber 15 through the oblique-injecting swirl nozzles 10.

The atomizing jet assembly comprises an atomizing nozzle 9 and an atomizing nozzle fixing seat 8. A number of rectangular grooves are cut in an outer middle wall 6 of the annular combustor, they are provided for tight attachment and assemblage with the atomizing nozzle fixing seat 8. A rectangular plane is provided with a threaded hole, so as to be fixedly mounted to the atomizing nozzle fixing seat 8 by means of a bolt. The rectangular plane is provided with a through hole, which allows the atomizing nozzle 9 to pass through and supply atomized fuel into the annular combustor 16. An upper surface and a lower surface of the outer middle wall 6 of the annular combustor are both provided with bosses, which can be respectively configured to receive and limit an outer upper wall 7 of the annular combustor and to be placed on an outer lower wall 5 of the annular combustor. Each contact mounting clearance is in a millimeter order. This clearance can meet expansion and contraction deformation of a face of the outer upper wall 7 of the annular combustor and a face of the outer lower wall 5 of the annular combustor that is made of quartz glass and a face of the outer middle wall 6 of the annular combustor that is made of stainless steel.

The atomizing nozzle fixing seat 8 is provided with four atomizing nozzle fixing holes 17 for fixing the atomizing nozzle fixing seat to the outer middle wall 6 of the annular combustor after bolts pass through, and is further provided with two oblique threaded holes that are a fuel delivery inlet threaded hole 27 and an atomizing nozzle connecting threaded hole 28, which are respectively configured to mount and connect a fuel delivery pipeline and the atomizing nozzle 9. The fuel delivery inlet threaded hole 27 and the atomizing nozzle connecting threaded hole 28 can adjust a radial included angle between the atomizing nozzle 9 and the annular combustor 16, so as to adjust the structural parameters of an included angle between the atomizing nozzle 9 and the outer middle wall 6 of the annular combustor. The outer lower wall 5 of the annular combustor is provided with an ignition pin hole 18, and an ignition pin is inserted into the annular combustor 16 from the ignition pin hole 18 to ignite a mixture of air and the atomized fuel.

An atomizing nozzle 9 fixing support is made of an aluminum alloy with its dead weight lighter than that of stainless steel, and is fixed to the outer middle wall 6 of the annular combustor by means of four bolts, with an axial displacement being within a maximum limit displacement range, and the deformation after experimental heating being also within the maximum limit deformation range. An acute-angle channel with the annular combustor 16 in a radial direction can meet that the atomizing nozzle 9 and an inlet of the fuel delivery pipeline are in the same axial direction. At this time, an acute angle is formed between an outlet of the atomizing nozzle 9 and an outlet of the outer middle wall 6 of the annular combustor. Two ends of this channel are hermetically fitted by means of threads to ensure that an outlet of the fuel delivery pipeline and an inlet of the atomizing nozzle 9 are in the same pressure chamber, so that fuel can form mist by means of the atomizing nozzle 9. Further, the atomizing nozzle 9 and the outer middle wall 6 of the annular combustor may be inverted as a whole, so that an included angle between the atomizing nozzle 9 and the oblique-injecting swirl nozzle 10 can be adjusted, which is an obtuse angle in this case.

The atomizing nozzle 9 is made of a metal, which can withstand high temperature for several minutes. In addition, the atomizing nozzle has different atomizing cone angles of 30°, 45°, 60° and 80°, and pore diameters of 0.5 m, 1 mm, 1.5 mm, and 2 mm, so that structural parameters of different atomization effects can be adjusted.

The oblique-injecting swirl nozzle 10 is provided with a central blind hole as a main flow channel 31, and an acute angle is formed between an axis of the main flow channel 31 and a central axis of the annular combustor 16. A side wall of the oblique-injecting swirl nozzle 10 is provided with two channels with tangential circular holes, which are a first swirl channel 32 and a second swirl channel 33. The first swirl channel 32 and the second swirl channel 33 each are provided with six circular holes. Airflow enter the main flow channel 31 from the channels with tangential circular holes to form swirl flow. An outer wall of the oblique-injecting swirl nozzle 10 is provided with a boss 30 of the oblique-injecting swirl nozzle and a recess 29 of the oblique-injecting swirl nozzle, which are respectively configured to be in close fit with the top flange and to fixedly mount the oblique-injecting swirl nozzle 10 on the top flange 3 by means of bolts. The oblique-injecting swirl nozzle 10 can effectively enhance the turbulence of air, improve the effect of mixing with the atomized fuel, and further provide circumferential angular momentum for the airflow entering the annular combustor 16 to reduce an aerodynamic loss. Further, the uniformity of a velocity field and a temperature field at an outlet of the annular combustor 16 is improved.

The distribution chamber 15 further comprises a middle flange 2, a bottom flange 1, and a middle support column 12. The bottom flange 1, the middle flange 2, and the top flange 3 are bolted with each other by means of peripheral fastening bolt holes 21, and form a sealed distribution chamber 15 together with the middle support column 12 and a middle fastening bolt 11. An upper surface of the middle flange 2 is provided with a sealing groove 22 for receiving a sealing ring, and is sealed by being pressed against the top flange 3.

The middle support column 12 is provided in the centre with a through hole for allowing the middle fastening bolt 11 to pass through, an upper surface thereof is provided with a sealing groove 22 for receiving a sealing ring and is sealed by being pressed against the top flange 3, and a lower surface thereof is provided with a boss for limiting a honeycomb plate 13.

An upper surface of the lower flange is provided with an inner and an outer sealing groove 22 for receiving sealing rings, and seals the distribution chamber 15 by contact with the middle support column 12 and the middle flange 2, and the lower flange is provided in the centre with a through hole for allowing the bolt to pass through, so as to be fixedly connected to the top flange 3 and the middle support column 12. A bottom surface of the lower flange is provided with a number of circumferentially symmetrically and uniformly distributed threaded holes, and the threaded holes are air inlets 14. This enables a pressure environment in the distribution chamber 15 to maintain a certain symmetry and uniformity, and the pressure environment causes the mixed gas to enter each oblique-injecting swirl nozzle 10 at a relatively uniform flow rate, which facilitates the realization of a similarity in flow and combustion between the nozzles. A lower surface of the lower flange is internally chamfered to strengthen the structural strength of the bottom of the distribution chamber 15, and an outer edge of the lower surface is provided with a burner bottom fixing hole 20 for being fixedly mounted to an optical platform.

The bottom flange 1 bears dozens of kilograms of load including the dead weight, with an integral structure being of a thick-walled design to ensure strength and rigidity, and is further mounted in a fitting manner on an experimental platform with sufficient strength, rigidity and stability to meet requirements for loading of the entire device.

The distribution chamber 15 further comprises a honeycomb plate 13, the middle flange 2 passes through the centre of the honeycomb plate 13, and the honeycomb plate 13 is mounted at a bottom end of the middle flange. A number of small holes are uniformly distributed in the honeycomb plate 13. After airflow passes through the holes, the turbulence and vortex can be weakened, and the airflow uniformity in the distribution chamber 15 is improved. The staggered arrangement of a plurality of layers of honeycomb plates 13 can further improve this effect.

A side wall of the middle flange 2 is provided with acoustic pressure test holes 19. Plugs or acoustic measuring plugs are mounted in the acoustic pressure test holes 19 of the side wall and can output pressure signals of the distribution chamber 15 to a data acquisition system, so as to provide experimental data for research on the atomization ignition mechanism of the oblique-injecting non-premixed annular combustor 16.

The outer wall assembly of the annular combustor comprises an outer lower wall 5 of the annular combustor, an outer middle wall 6 of the annular combustor, and an outer upper wall 7 of the annular combustor. The outer lower wall 5 of the annular combustor is mounted at the bottom end of the outer middle wall 6 of the annular combustor, the outer upper wall 7 of the annular combustor is mounted at the top end of the outer middle wall 6 of the annular combustor, the outer lower wall 5 of the annular combustor is mounted on the top flange 3, the atomizing jet assembly is mounted on the outer middle wall 6 of the annular combustor, and the ignition pin hole 18 is formed in the outer lower wall 5 of the annular combustor.

Transparent thick-walled cylinders made of quartz are used as the outer upper wall 7 of the annular combustor and the outer lower wall 5 of the annular combustor, and have the following characteristics: the transparent thick-walled cylinders are resistant to high temperature, have a small thermal expansion rate, and can effectively adapt to a high temperature environment; a quartz tube is thick enough to ensure the strength, and the pressure resistance exceeds 10 atm within a safe range; and the transparent quartz tube can provide a window for optical measurement and data acquisition.

The outer middle wall 6 of the annular combustor is made of stainless steel. A plurality of groups of atomized jet outlets 23, atomizing nozzle fixing seat limiting bosses 24 and atomizing nozzle fixing seat mounting threaded holes 25 for mounting the atomizing nozzle 9 and the atomizing nozzle fixing seat 8 are circumferentially and uniformly distributed on the outer middle wall 6 the annular combustor. An inner side of the outer middle wall 6 of the annular combustor is further provided with a quartz glass limiting boss 26. The outer middle wall of the annular combustor is deformed radially outwardly due to heating during an experiment, the deformation has little impact on the experiment in terms of errors, and the deformation is smaller than the thermal deformation of the outer upper wall 7 of the annular combustor and the outer lower wall 5 of the annular combustor that is made of quartz, which can ensure that an outer wall of the annular combustor 16 is in a safe experimental environment.

The heights of the outer upper wall 7 of the annular combustor and the outer lower wall 5 of the annular combustor can be adjusted, so as to conduct experimental research at different atomization heights from an obliquely-injected jet outlet. The outer lower wall 5 of the annular combustor is configured to have different heights to adjust a distance between the atomizing nozzle 9 and an outlet of the annular combustor 16, so as to explore changes of flow field characteristics, ignition performance and flame propagation process as atomized fuel is injected at different outlet positions.

Fastening bolts in a burner are all made of alloy steel, middle fastening bolts have a strength of Class 12.9, and by cooperation with outer edge fastening bolts with a strength of Class 10.9, the entire burner is ensured to be tightly and hermetically fitted, which meets safety requirements under high pressure inside the distribution chamber 15.

The experimental device according to the present invention can be effectively applied to research on the mechanism of flow field characteristics, ignition performance and flame propagation of the oblique-injecting jet non-premixed annular combustor 16, especially the research related to fuel atomization close to the annular combustor 16 of an actual engine.

### Embodiment 2

In step S1, a bottom flange 1 is fixed to an optical platform, an air supply pipeline is connected to air inlets 14 after passing through a middle hole of the optical platform, then a honeycomb plate 13 and a middle support column 12 are coaxially placed on the bottom flange 1, a sealing ring is placed in a sealing groove 22, oblique-injecting swirl nozzles 10 are mounted to a top flange 3, then the integrated structure is connected to a middle flange 2 by means of bolts, and then the connected integrated structure is connected to the bottom flange 1 by means of outer edge bolts and middle fastening bolts 11, to complete the assembly of a distribution chamber 15.

In step S2, an inner wall 4 of an annular combustor and an outer lower wall 5 of the annular combustor are placed on the top flange 3 and limited by bosses, then a fuel delivery pipeline is connected to an atomizing nozzle fixing seat 8, an atomizing nozzle 9 is mounted on the atomizing nozzle fixing seat 8, the integrated structure is fixed to an outer middle wall 6 of the annular combustor, the outer middle wall 6 of the annular combustor is placed on an outer lower wall 5 of the annular combustor, finally an outer upper wall 7 of the annular combustor is placed on the outer middle wall 6 of the annular combustor, and limiting between each other is implemented by means of bosses, so as to complete the assembly of the annular combustor 16.

In step S3, circumferentially symmetric acoustic pressure test holes 19 in an outer wall of the middle flange 2 are connected to acoustic pressure signal collectors to complete acoustic pressure collection.

The above description of the disclosed embodiments enables those skilled in the art to achieve or use the present invention. Various modifications to these embodiments will be apparent to those skilled in the art. The present invention is defined in the appended claims.

## Claims

1. A device for research on an ignition mechanism of an oblique-injecting non-premixed annular combustor, comprising: a distribution chamber (15) and an annular combustor (16), wherein the distribution chamber (15) comprises a top flange (3), and the annular combustor (16) comprises oblique-injecting swirl nozzles (10), an inner wall of the combustor, and an outer wall assembly of the combustor; and the inner wall of the combustor and the outer wall assembly of the combustor are mounted at a top end of the top flange (3); each of the oblique-injecting swirl nozzles (10) obliquely passes through the top flange (3) and is mounted on the top flange (3), and the annular combustor (16) is in communication with the distribution chamber (15) through the oblique-injecting swirl nozzle (10), wherein a side wall of the outer wall assembly of the combustor is provided with an ignition pin hole (18), **characterized in that**
the device further comprises an atomizing jet assembly, wherein the atomizing jet assembly comprises an atomizing nozzle (9) and an atomizing nozzle (9) fixing seat (8),
wherein the atomizing nozzle (9) fixing seat (8) is provided with a fuel delivery inlet threaded hole (27) and an atomizing nozzle (9) connecting threaded hole, the atomizing nozzle (9) fixing seat (8) is in a threaded connection with a side wall of an outer middle wall of the combustor, the atomizing nozzle (9) is mounted in the atomizing nozzle (9) connecting threaded hole, and the fuel delivery inlet threaded hole (27) is connected to a fuel delivery pipeline, wherein
the oblique-injecting swirl nozzle (10) is provided with a first swirl channel (32), a second swirl channel (33), and a main flow channel (31).

2. The device for research on an ignition mechanism of an oblique-injecting non-premixed annular combustor according to claim 1, **characterized in that** angles of the fuel delivery inlet threaded hole (27) and the atomizing nozzle (9) connecting threaded hole are adjustable, so as to conduct experimental research at different included angles formed between an atomized jet and an obliquely-injected air jet.

3. The device for research on an ignition mechanism of an oblique-injecting non-premixed annular combustor according to claim 1, **characterized in that** the distribution chamber (15) further comprises a middle flange (2), a bottom flange (1), and a middle support column (12), wherein the middle flange (2) is in a threaded connection with a top end of the bottom flange (1), the top flange (3) is in a threaded connection with a top end of the middle flange (2), the middle support column (12) is located on a central axis and is in a threaded connection between the top flange (3) and the bottom flange (1), and the bottom flange is provided with air inlets (14).

4. The device for research on an ignition mechanism of an oblique-injecting non-premixed annular combustor according to claim 3, **characterized in that** the air inlets (14) are circumferentially symmetrically distributed in the bottom flange (1).

5. The device for research on an ignition mechanism of an oblique-injecting non-premixed annular combustor according to claim 3, **characterized in that** the distribution chamber further comprises a honeycomb plate (13), the middle flange (2) passes through the centre of the honeycomb plate (13), and the honeycomb plate is mounted at a bottom end of the middle flange (2).

6. The device for research on an ignition mechanism of an oblique-injecting non-premixed annular combustor according to claim 3, **characterized in that** a side wall of the middle flange (2) is provided with an acoustic pressure test hole (19).

7. The device for research on an ignition mechanism of an oblique-injecting non-premixed annular combustor according to claim 1, **characterized in that** the outer wall assembly of the combustor comprises an outer lower wall of the combustor, the outer middle wall of the combustor, and an outer upper wall of the combustor, wherein the outer lower wall of the combustor is mounted at a bottom end of the outer middle wall of the combustor, the outer upper wall of the combustor is mounted at a top end of the outer middle wall of the combustor, the outer lower wall of the combustor is mounted on the top flange (3), the atomizing jet assembly is mounted on the outer middle wall of the combustor, and the ignition pin hole (18) is formed in the outer lower wall of the combustor.

8. The device for research on an ignition mechanism of an oblique-injecting non-premixed annular combustor according to claim 7, **characterized in that** the outer upper wall of the combustor and the outer lower wall of the combustor have adjustable heights, so as to conduct experimental research at different atomization heights from an obliquely-injected jet outlet.

## Patentansprüche

1. Vorrichtung zur Untersuchung eines Zündmechanismus einer schräg einspritzenden, nicht vorgemischten ringförmigen Brennkammer, umfassend: eine Verteilerkammer (15) und eine ringförmige Brennkammer (16),
wobei die Verteilerkammer (15) einen oberen Flansch (3) umfasst, und die ringförmige Brennkammer (16) schräg einspritzende Dralldüsen (10), eine Innenwand der Brennkammer und eine Außenwandanordnung der Brennkammer umfasst; und die Innenwand der Brennkammer und die Außenwandanordnung der Brennkammer an einem oberen Ende des oberen Flansches (3) montiert sind; jede der schräg einspritzenden Dralldüsen (10) schräg durch den oberen Flansch (3) verläuft und am oberen Flansch (3) montiert ist, und die ringförmige Brennkammer (16) über die schräg einspritzende Dralldüse (10) mit der Verteilerkammer (15) in Verbindung steht, wobei eine Seitenwand der Außenwandanordnung der Brennkammer mit einem Zündstiftloch (18) versehen ist,
**dadurch gekennzeichnet, dass** die Vorrichtung ferner eine Zerstäubungsdüsenanordnung umfasst, wobei die Zerstäubungsdüsenanordnung eine Zerstäuberdüse (9) und einen die Zerstäuberdüse (9) fixierenden Sitz (8) umfasst, wobei der die Zerstäuberdüse (9) fixierende Sitz (8) mit einem Gewindeloch (27) für den Kraftstoffzufuhreinlass und einem Verbindungsgewindeloch für die Zerstäuberdüse (9) versehen ist, wobei sich der die Zerstäuberdüse (9) fixierende Sitz (8) in Gewindeverbindung mit einer Seitenwand einer äußeren Mittelwand der Brennkammer befindet, die Zerstäuberdüse (9) in dem Verbindungsgewindeloch für die Zerstäuberdüse (9) montiert ist, und das Gewindeloch (27) für den Kraftstoffzufuhreinlass mit einer Kraftstoffzufuhrleitung verbunden ist, wobei die schräg einspritzende Dralldüse (10) mit einem ersten Drallkanal (32), einem zweiten Drallkanal (33) und einem Hauptströmungskanal (31) versehen ist.

2. Vorrichtung zur Untersuchung eines Zündmechanismus einer schräg einspritzenden, nicht vorgemischten ringförmigen Brennkammer nach Anspruch 1, **dadurch gekennzeichnet, dass** die Winkel des Gewindelochs (27) für den Kraftstoffzufuhreinlass und des Verbindungsgewindelochs für die Zerstäuberdüse (9) einstellbar sind, um experimentelle Untersuchungen bei verschiedenen eingeschlossenen Winkeln durchzuführen, die zwischen einem zerstäubten Strahl und einem schräg eingespritzten Luftstrahl gebildet werden.

3. Vorrichtung zur Untersuchung eines Zündmechanismus einer schräg einspritzenden, nicht vorgemischten ringförmigen Brennkammer nach Anspruch 1, **dadurch gekennzeichnet, dass** die Verteilerkammer (15) ferner einen mittleren Flansch (2), einen unteren Flansch (1) und eine mittlere Tragsäule (12) umfasst, wobei der mittlere Flansch (2) in einer Gewindeverbindung mit einem oberen Ende des unteren Flansches (1) steht, der obere Flansch (3) in einer Gewindeverbindung mit einem oberen Ende des mittleren Flansches (2) steht, die mittlere Tragsäule (12) sich auf einer Mittelachse befindet und in einer Gewindeverbindung zwischen dem oberen Flansch (3) und dem unteren Flansch (1) steht, und der untere Flansch mit Lufteinlässen (14) versehen ist.

4. Vorrichtung zur Untersuchung eines Zündmechanismus einer schräg einspritzenden, nicht vorgemischten ringförmigen Brennkammer nach Anspruch 3, **dadurch gekennzeichnet, dass** die Lufteinlässe (14) in Umfangsrichtung symmetrisch im unteren Flansch (1) verteilt sind.

5. Vorrichtung zur Untersuchung eines Zündmechanismus einer schräg einspritzenden, nicht vorgemischten ringförmigen Brennkammer nach Anspruch 3, **dadurch gekennzeichnet, dass** die Verteilerkammer ferner eine Wabenplatte (13) umfasst, der mittlere Flansch (2) durch die Mitte der Wabenplatte (13) verläuft und die Wabenplatte an einem unteren Ende des mittleren Flansches (2) montiert ist.

6. Vorrichtung zur Untersuchung eines Zündmechanismus einer schräg einspritzenden, nicht vorgemischten ringförmigen Brennkammer nach Anspruch 3, **dadurch gekennzeichnet, dass** eine Seitenwand des mittleren Flansches (2) mit einem akustischen Drucktestloch (19) versehen ist.

7. Vorrichtung zur Untersuchung eines Zündmechanismus einer schräg einspritzenden, nicht vorgemischten ringförmigen Brennkammer nach Anspruch 1, **dadurch gekennzeichnet, dass** die Außenwandanordnung der Brennkammer eine untere Außenwand der Brennkammer, die mittlere Außenwand der Brennkammer und eine obere Außenwand der Brennkammer umfasst, wobei die untere Außenwand der Brennkammer an einem unteren Ende der mittleren Außenwand der Brennkammer montiert ist, die obere Außenwand der Brennkammer an einem oberen Ende der mittleren Außenwand der Brennkammer montiert ist, die untere Außenwand der Brennkammer am oberen Flansch (3) montiert ist, die Zerstäubungsdüsenanordnung an der äußeren Mittelwand der Brennkammer montiert ist und das Zündstiftloch (18) in der unteren Außenwand der Brennkammer ausgebildet ist.

8. Vorrichtung zur Untersuchung eines Zündmechanismus einer schräg einspritzenden, nicht vorgemischten ringförmigen Brennkammer nach Anspruch 7, **dadurch gekennzeichnet, dass** die obere Außenwand der Brennkammer und die untere Außenwand der Brennkammer einstellbare Höhen aufweisen, um experimentelle Untersuchungen bei unterschiedlichen Zerstäubungshöhen aus einem schräg eingeblasenen Strahlaustritt durchzuführen.

## Revendications

1. Dispositif de recherche sur un mécanisme d'allumage d'une chambre de combustion annulaire non prémélangée à injection oblique, comprenant : une chambre de distribution (15) et une chambre de combustion annulaire (16), dans lequel la chambre de distribution (15) comprend une bride supérieure (3), et la chambre de combustion annulaire (16) comprend des buses de tourbillonnement à injection oblique (10), une paroi intérieure de la chambre de combustion, et un ensemble de parois extérieures de la chambre de combustion ; et la paroi intérieure de la chambre de combustion et l'ensemble de parois extérieures de la chambre de combustion sont montés à une extrémité supérieure de la bride supérieure (3) ; chacune des buses de tourbillonnement à injection oblique (10) passe obliquement à travers la bride supérieure (3) et est montée sur la bride supérieure (3), et la chambre de combustion annulaire (16) est en communication avec la chambre de distribution (15) à travers la buse de tourbillonnement à injection oblique (10), dans lequel une paroi latérale de l'ensemble de parois extérieures de la chambre de combustion est pourvue d'un trou d'épingle d'allumage (18),
**caractérisé en ce que**
le dispositif comprend en outre un ensemble de jets d'atomisation, dans lequel l'ensemble de jets d'atomisation comprend une buse d'atomisation (9) et un siège de fixation (8) de buse d'atomisation (9),
dans lequel le siège de fixation (8) de buse d'atomisation (9) est pourvu d'un trou fileté d'entrée de distribution de carburant (27) et d'un trou fileté de liaison de buse d'atomisation (9), le siège de fixation (8) de buse d'atomisation (9) est en liaison filetée avec une paroi latérale d'une paroi centrale extérieure de la chambre de combustion, la buse d'atomisation (9) est montée dans le trou fileté de liaison de buse d'atomisation (9), et le trou fileté d'entrée de distribution de carburant (27) est relié à une canalisation de distribution de carburant, dans lequel
la buse de tourbillonnement à injection oblique (10) est pourvue d'un premier canal de tourbillonnement (32), d'un second canal de tourbillonnement (33) et d'un canal d'écoulement principal (31).

2. Dispositif de recherche sur un mécanisme d'allumage d'une chambre de combustion annulaire non prémélangée à injection oblique selon la revendication 1, **caractérisé en ce que** des angles du trou fileté d'entrée de distribution de carburant (27) et du trou fileté de liaison de buse d'atomisation (9) sont ajustables, de manière à réaliser une recherche expérimentale à différents angles inclus formés entre un jet atomisé et un jet d'air à injection oblique.

3. Dispositif de recherche sur un mécanisme d'allumage d'une chambre de combustion annulaire non prémélangée à injection oblique selon la revendication 1, **caractérisé en ce que** la chambre de distribution (15) comprend en outre une bride centrale (2), une bride inférieure (1) et une colonne de support centrale (12), dans lequel la bride centrale (2) est en liaison filetée avec une extrémité supérieure de la bride inférieure (1), la bride supérieure (3) est en liaison filetée avec une extrémité supérieure de la bride centrale (2), la colonne de support centrale (12) est située sur un axe central et est en liaison filetée entre la bride supérieure (3) et la bride inférieure (1), et la bride inférieure est pourvue d'entrées d'air (14).

4. Dispositif de recherche sur un mécanisme d'allumage d'une chambre de combustion annulaire non prémélangée à injection oblique selon la revendication 3, **caractérisé en ce que** les entrées d'air (14) sont symétriquement réparties circonférentiellement dans la bride inférieure (1).

5. Dispositif de recherche sur un mécanisme d'allumage d'une chambre de combustion annulaire non prémélangée à injection oblique selon la revendication 3, **caractérisé en ce que** la chambre de distribution comprend en outre une plaque alvéolaire (13), la bride centrale (2) passe à travers le centre de la plaque alvéolaire (13), et la plaque alvéolaire est montée à une extrémité inférieure de la bride centrale (2).

6. Dispositif de recherche sur un mécanisme d'allumage d'une chambre de combustion annulaire non prémélangée à injection oblique selon la revendication 3, **caractérisé en ce qu'**une paroi latérale de la bride centrale (2) est pourvue d'un trou de test de pression acoustique (19).

7. Dispositif de recherche sur un mécanisme d'allumage d'une chambre de combustion annulaire non prémélangée à injection oblique selon la revendication 1, **caractérisé en ce que** l'ensemble de parois extérieures de la chambre de combustion comprend une paroi inférieure extérieure de la chambre de combustion, la paroi centrale extérieure de la chambre de combustion et une paroi supérieure extérieure de la chambre de combustion, dans lequel la paroi inférieure extérieure de la chambre de combustion est montée à une extrémité inférieure de la paroi centrale extérieure de la chambre de combustion, la paroi supérieure extérieure de la chambre de combustion est montée à une extrémité supérieure de la paroi centrale extérieure de la chambre de combustion, la paroi inférieure extérieure de la chambre de combustion est montée sur la bride supérieure (3), l'ensemble de jets d'atomisation est monté sur la paroi centrale extérieure de la chambre de combustion, et le trou d'épingle d'allumage (18) est formé dans la paroi inférieure extérieure de la chambre de combustion.

8. Dispositif de recherche sur un mécanisme d'allumage d'une chambre de combustion annulaire non prémélangée à injection oblique selon la revendication 7, **caractérisé en ce que** la paroi supérieure extérieure de la chambre de combustion et la paroi inférieure extérieure de la chambre de combustion présentent des hauteurs ajustables, de manière à réaliser une recherche expérimentale à des hauteurs d'atomisation différentes à partir d'une sortie de jet à injection oblique.
